# EUROPEAN PATENT SPECIFICATION

(11) **EP 2 735 435 B1**
(45) Date of publication and mention of the grant of the patent: **14.12.2016**
(21) Application number: 12829396.6
(22) Date of filing: 24.08.2012
(51) Int. Cl.: B29D 30/30, B29D 30/36, B60C 9/09, B60C 19/00

(54) **PNEUMATIC TIRE PRODUCTION METHOD AND PNEUMATIC TIRE**
LUFTREIFENHERSTELLUNGSVERFAHREN UND LUFTREIFEN
PROCÉDÉ DE FABRICATION DE PNEUMATIQUES ET PNEUMATIQUE

(30) Priority: 05.09.2011 JP 2011193099
(43) Date of publication of application: 28.05.2014
(73) Proprietor: Sumitomo Rubber Industries, Ltd., Kobe-shi, Hyogo 651-0072 (JP)
(72) Inventor: ADACHI Yukishige, Kobe-shi Hyogo 651-0072 (JP); ONISHI Kei, Kobe-shi Hyogo 651-0072 (JP)
(74) Representative: Manitz, Finsterwald & Partner GbR
(86) International application number: PCT/JP2012/071466
(87) International publication number: WO 2013/035555

(56) References cited:
- EP-A1- 0 540 202
- EP-A1- 1 184 204
- JP-A- S5 867 502
- JP-A- H02 299 903
- JP-A- 2010 173 617

## Description

### TECHNICAL FIELD

The present invention relates to a pneumatic tire production method and a pneumatic tire enabl ed to reduce the devel opment of defect du ri ng vulcanization. The featu res of the preamble of the independent cl ai ms are known from JP 2010 173617 A. Rel ated technol ogi es are known from JP H02 299903 A, EP 1 184 204 A1 and EP 0 540 202 A1.

### BACKGROUND ART

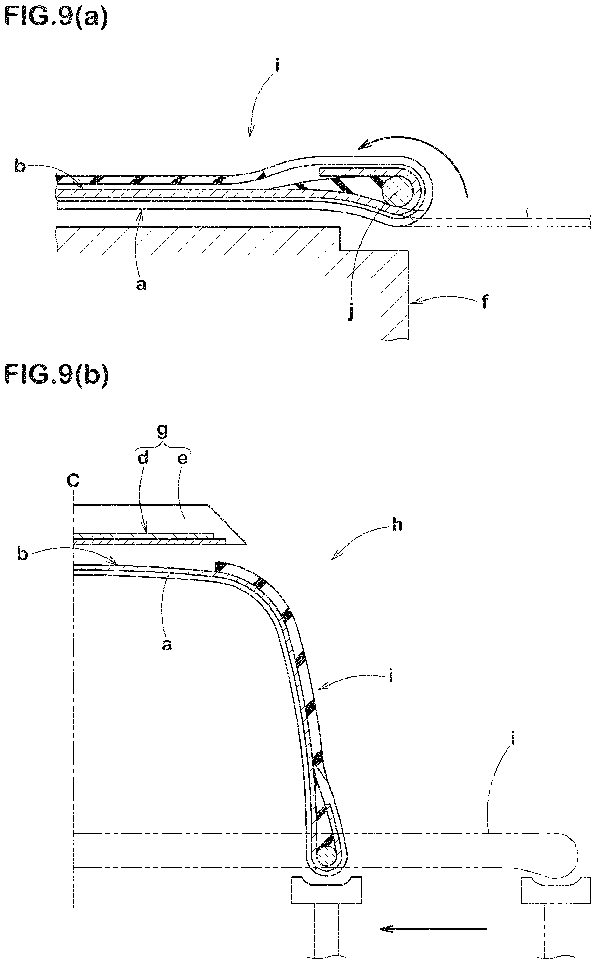

Firstly in a production method of a pneumatic tire, as shown in Fig 9(a), a sheet like inner liner rubber (a) and a carcass ply (b) are wound on a cylindrical former (f), and a bead core (j) and the like are inserted thereinto to former a cylindrical body (i), for example. Secondly, as shown in Fig. 9(b), the cylindrical body (i) is formed as a toroidal shape. Then, a rubber member (g) such as a belt ply (d) and a tread rubber (e) are adhered on the outer surface of the shaped carcass ply (b) so as to former a raw cover (h) (corresponding to a raw cover).

After this, the raw cover (h) i s vulcanized in a vulcanization mold (not shown) to former the pneumatic tire. A related document is as follows (see Patent Document 1).

### RELATED ART DOCUMENTS

### PATENT DOCUMENTS

Patent Document 1: Japanese Unexamined Patent Application Publication No. 2008-302860.

### SUMMARY OF THE INVENTION

### PROBLEMS TO BE SOLVED BY THE INVENTION

However, in the above-menti oned producti on method, at the ti me of shaping and vulcanizing, owing to a pressure applied on the raw cover (h), there is a problem that the ai r confined between the inner liner rubber (a) and the carcass ply (b) or between the carcass ply (b) and the rubber members (g) such as a tread rubber (e) acts as an air remaining and causes poor vulcanization such as a defect.

Accordingly, it is an object of the present invention to provide a pneumatic tire production method and a pneumatic tire capable of reducing the development of defect du ri ng vulcanization on the basis of provi di ng on at least one si de of a carcass pl y wi th rubber-un-coated air-absorptive organic fiber cords to intersect with carcass cords of the carcass ply.

### [Means for solving the Problems]

The invention according to claim 1 is a production method of a pneumatic tire with a carcass comprising a toroidal carcass ply extending from a tread portion through a sidewall portion to a bead core of a bead portion. The method of producing a pneumatic tire comprises
a carcass ply forming step to cover both surfaces of a code array made of the carcass cords of the carcass ply with a topping rubber, a step of forming raw cover including the carcass, and
a step of vulcanizing the raw cover.
The carcass ply forming step comprises an arranging process for arranging rubber-un-coated air-absorptive organic fiber cords on at least one side of the carcass ply so as to intersect with the carcass cords of the carcass ply.

The organic fiber cords are arranged at an angle of from 3 to 20 degrees with respect to the carcass cords.

In claim 2, the organic fiber cords are arranged in parallel at intervals of from 30 to 80 mm.

In claim 3, the organic fiber cords have a cord diameter of from 5% to 35% of the interval of the carcass cords.

In claim 4, the pneumatic tire compri si ng the toroi dal carcass extending from the tread portion through the sidewall portion to the bead core of the bead portion, and ai r-absorptive organic fiber cords intersecting with the carcass cords of the carcass ply on an inner or outer surface of the carcass ply, the organic fiber cord being rubber-un-coated before vulcanization, wherein the organic fiber cords are arranged at an angle of from 3 to 20 degrees with respect to the carcass cords.

### EFFECT OF THE INVENTION

The production method of the pneumatic tire of the present invention comprises a carcass ply forming step to cover the both of the code array made of the arranged carcass cords, a step of forming a raw cover including the carcass, and a step of vulcanizing a raw cover.

The carcass ply forming step comprises an arranging process for arranging a rubber-un-coated air-absorptive organic fiber cords on at least one side of the carcass ply so as to intersect the carcass cords of the carcass ply.

Accordingly, the ai r-absorptive organic fiber cords can absorb the air remaining between the inner liner rubber and the carcass ply or between the carcass ply and the rubber member into the longitudinal entire extent of the organic fiber cords. This will help to reduce a development of the air remaining, which is liable to arise in the step of forming the raw cover and in the vulcanization process. Therefore, a development of the poor vulcanization such as a defect can be reduced in the present invention.

Moreover, the organic fiber cords are arranged to intersect with carcass cords of the carcass ply. It can be prevented that the organic fiber cords sink into the topping rubber between the carcass cords caused by the pressure appl i ed on the raw cover during the shaping and vulcanizing. And damage of the carcass ply and the development of the defect caused by the disarray of the interval of the carcass cord can be reduced.

### BRIEF EXPLANATION OF THE DRAWING

[Fig. 1] Fig. 1 is a cross-sectional view of a pneumatic ti re produced in the production method of the present embodiment.
[Fig. 2] Fig. 2 is a developed view showing a carcass ply, a belt ply, and organic fiber cords.
[Fig. 3] Fig. 3 is a cross-sectional view explaining a step of forming a raw cover.
[Fig. 4] Fig. 4 is a cross-sectional vi ew expl ai ni ng the step of formi ng the raw cover.
[Fig. 5] Fig. 5 is a cross-sectional view explaining a step of vulcanizing the raw cover.
[Figs. 6] Fig. 6(a) is a cross-sectional view taken on the line A-A of Fig. 2; and Fig. 6(b) is a cross-secti onal view showing the carcass ply and the organic fiber cords.
[Fig. 7] Fig. 7 is across-sectional view explaining the step of forming the raw cover of another embodiment.
[Fig. 8] Fig. 8 is a developed view showing the carcass ply, the belt ply, and the organic fiber cords of Fig. 7.
[Figs. 9] Figs. 9(a) and 9(b) are cross-sectional views explaining a traditional raw cover forming step.

### MODE FOR CARRYING OUT THE INVENTION

Hereinafter, an embodiment of the present invention will be concretely described with referent to the drawings.

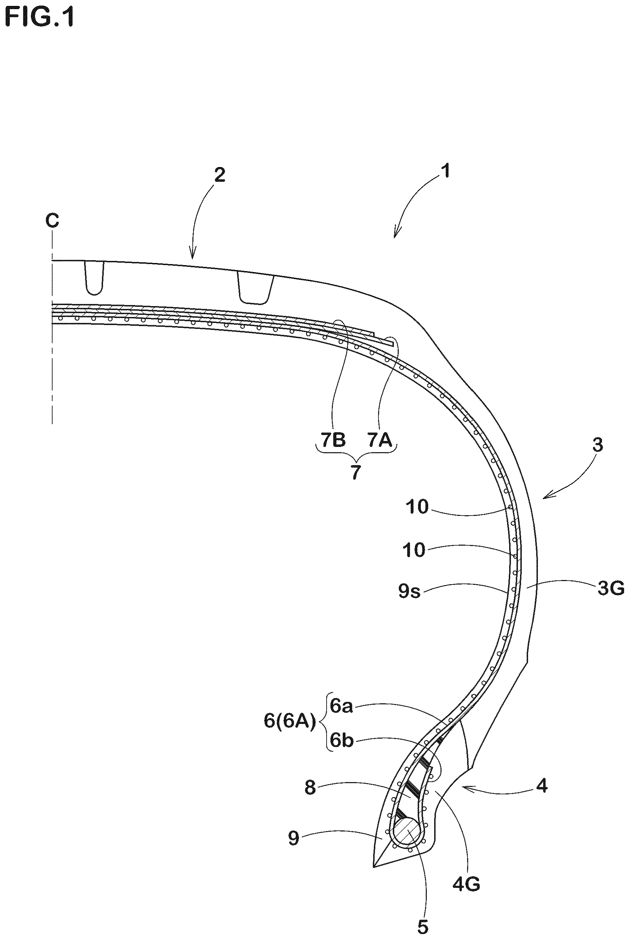

As shown in Fig. 1, a pneumatic tire 1 (hereinafter simply called "ti re") of the present embodiment comprises a toroi dal carcass 6 extending from a tread portion 2 through a sidewall portion 3 to a bead core 5 of a bead portion 4, a belt layer 7 disposed outside the carcass 6 in the tire radial di recti on and i nsi de the tread porti on 2, and an inner liner rubber 9 di sposed i nsi de the carcass 6 and formi ng a ti re cavity surface 9s. The pneumatic tire 1 of the present embodiment is formed as a tire for passenger car, for example.

The carcass 6 comprises at least one carcass ply 6A, a single carcass ply 6A in the present embodiment. The carcass ply 6A comprises a main porti on 6a extendi ng from the tread porti on 2 through the si dewal 1 portion 3 to the bead core 5 of the bead portion 4, and a turned up portion 6b extending from the main portion 6a and turned up around the bead core 5 from the inside to the outside in the axial direction of the tire. Between the main portion 6a and the turned up portion 6b, there is a bead apex 8 extending from the bead core 5 outward in the radial direction of the ti re and made of hard rubber to reinforce the bead portion 4 arbitrarily.

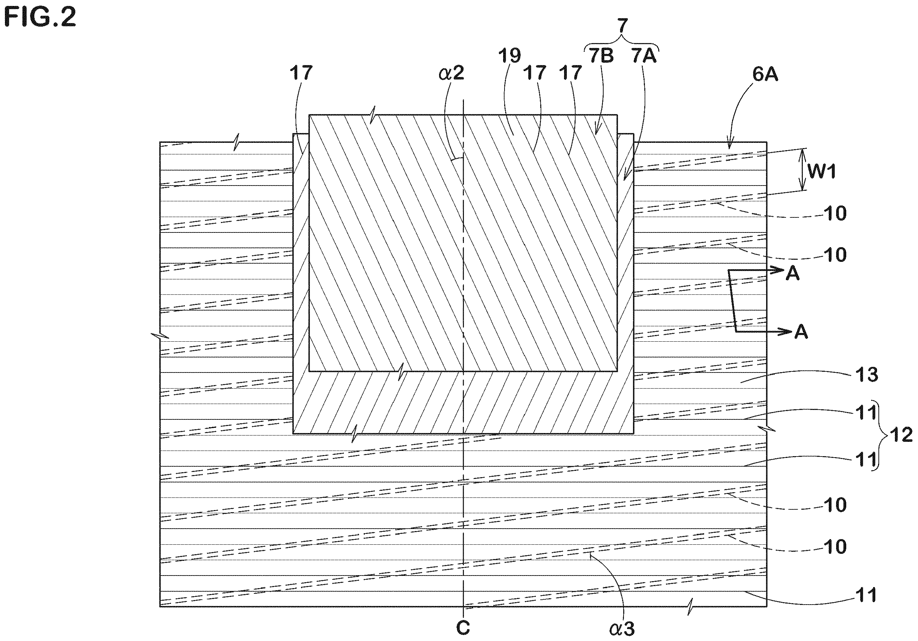

As shown in Fig. 2, the carcass ply 6A comprises an array 12 of carcass cords 11 arranged at an angle of from 70 to 90 degrees with respect to the tire equator C (shown in Fig. 1), for example, and a topping rubber 13 covering the both surfaces of the array 12. As the carcass cords 11, organic fiber cords such as polyester; nylon, rayon or aramid is preferably employed, for example.

As shown in Figs. 1 and 2, the belt layer 7 comprises at least two belt plies, two radially inner and outer belt plies 7A and 7B in the present embodiment, made of belt cords 17 arranged at an angle α2 of from 10 to 40 degrees with respect to the tire equator C. The two belt plies 7A and 7B are superposed in the intersectant di recti ons of the respective belt cords 17.

As the belt cord 17 of the present embodiment, a steel cord is employed, but a high elastic organic fiber cord such as a cord of aramid, rayon and the like can be employed as needed basis.

The inner liner rubber 9 extends the substantially enti re area of the tire cavity surface 9s between the bead cores 5, 5 in the toroidal fashion. The inner liner rubber 9 is made of a butyl system rubber or an air impermeant rubber comprising halogenated butyl of not less than 50 parts by weight in the rubber so as to keep a tire internal pressure.

The tire 1 of the present embodiment is provided on at least one side of the carcass ply 6A with an air-absorptive organic fiber cords10 intersecting with the carcass cords 11 of the carcass ply 6A. The organic fiber cords 10 are not rubber-coated before vulcanization.

During vulcanization, such as these organic fiber cords 10 absorbs the residual air between the inner liner rubber 9 and the carcass ply 6A or between the carcass ply 6A and the rubber member such as the sidewall rubber 3G in the longitudinally overall range. This helps to reduce the development of air remaining, which arises during vulcanization. Therefore, the tire 1 can reduce the development of poor vulcanization such as defect and improve an appearance of the tire.

The present embodiment shows a case that the organic fiber cords 10 are disposed inside the carcass ply 6A as an example. This reduces the development of the air remaining between the inner liner rubber 9 and the carcass ply 6A and between the clinch rubber 4G and the carcass ply 6A. Accordingly the development of the defect on the ti re cavity surface and the bead porti on outer su rface can be reduced. The organic fiber cords 10 can be arranged outside the carcass ply 6A. In this case, the development of the air remaining between the carcass ply 6A and the sidewall rubber 3G and the development of the defect on the sidewall outer surface can be reduced. Furthermore, the organic fi ber cords 10 may be arranged on both si des of the carcass ply 6A. As the organic fiber cords 10 are arbitrarily employed, but a synthetic fiber cord such as polyethylene cord, polyester cord or nylon cord and the like is preferably employed. The organic fiber cords 10 do not include any spun yarn made of spining natural fiber such as cotton and wool.

A producti on method of the above-menti oned ti re 1 of the present embodiment will be described.

The production method of the present embodiment comprises a carcass ply forming step forming the carcass ply 6A, a step of forming a raw cover L1 including the carcass 6, and a step of vulcanizing the raw cover L1.

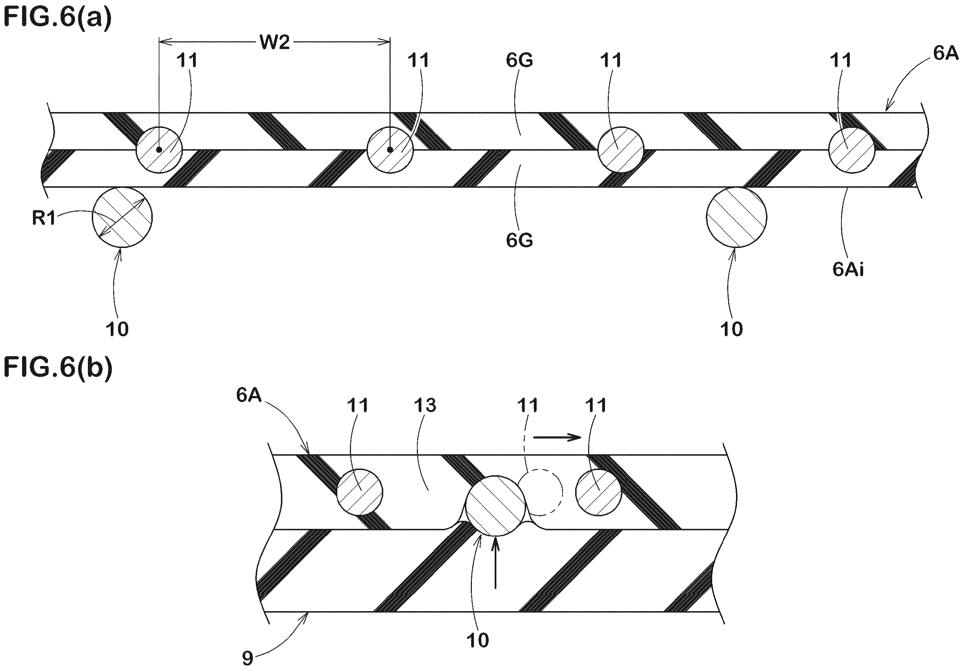

In the carcass ply forming step, as shown in Fig. 6(a), the both surfaces of the code array compri si ng the carcass cords 11 parallel arranged is covered wi th the toppi ng rubber 6G so as to form the carcass ply 6A.

Moreover, as shown i n Figs. 2 and 6(a), the carcass ply formi ng step comprises an arrangi ng process for arrangi ng the rubber-un-coated air-absorptive organic fiber cords 10 on at least one surface of the carcass ply 6A so as to intersect with the carcass cords 11. This forms a composite ply incorporating the carcass ply 6A into the air-absorptive organic fiber cords 10.

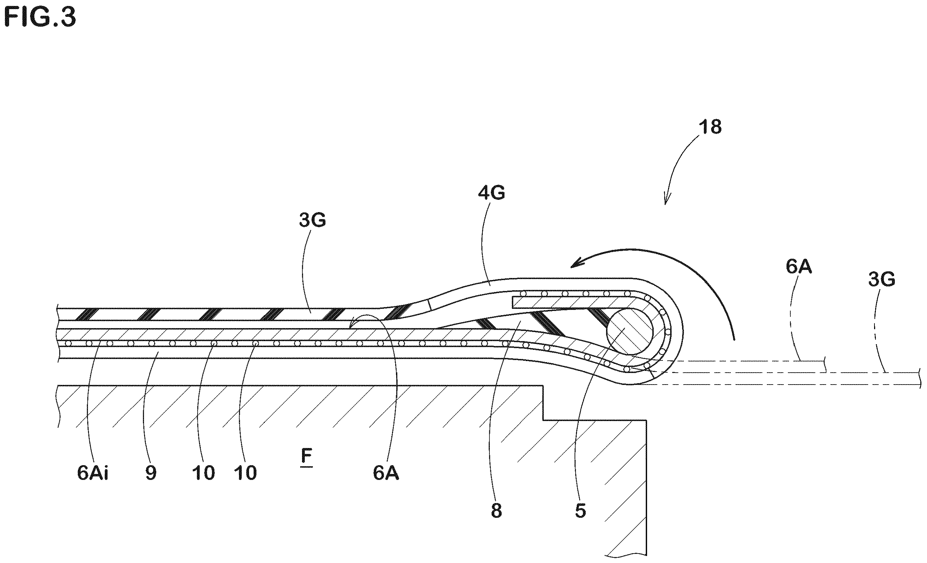

In the raw cover 1L, such as the organic fiber cords 10 are disposed between the inner liner rubber 9 and the carcass ply 6A and between the carcass ply 6A and the sidewall rubber 3G (shown in Fig. 3), for example, so that the interval of fibers of the organic fiber cords 10 can absorb directly the air remaining therebetween in the longitudinally overall range. Accordingly, the development of air remaining possibly caused by the pressure on the raw cover 1L can be reduced at the times of shaping and vulcanization. Therefore, in the production method of the present embodiment, the development of the defect during vulcanization can be effectively inhibited specifically on the outer surface of the bead portion 4, the tire cavity surface 9s, and the outer surface of the sidewall portion 3.

Furthermore, the organic fiber cords 10 are arranged so as to intersect with the carcass cords 11 of the carcass ply 6A. Therefore, as shown in Fig. 6(b), it can be prevented that the organic fiber cords 10 sink too much into the topping rubber 13 between the carcass cords 11, 11 caused by the pressure applied on the raw cover 1L at the time of shaping and vulcanizing. Thus, a damage of the carcass ply 6A caused by disarray of intervals of the carcass cords 11, 11 and the development of the defect during vulcanization can be effectively inhibited.

As shown in Fig. 2, when the angle α3 of the organic fiber cords 10 with respect to the carcass cords 11 is small, the damage and the development of the defect during vulcanization cannot be possibly prevented sufficiently. However, when the angle α3 is large, the organic fiber cords 10 come near in the tire circumferential direction and possibly inhibits a smooth shaping. With the object of this, the angle α3 is not less than 3 degrees, preferably not less than 5 degrees; and the upper limit is not more than 20 degrees, preferably not more than 15 degrees.

The organic fiber cords 10 of the present embodiment are preferably arranged in parallel at a regular interval w1. Thus makes the organic fiber cords 10 to absorb evenly the air remaining between the members adjacent to the carcass ply 6A, and can prevent the development of the defect much more effectively.

when the interval w1 of the organic fiber cords 10 is wide, the air between the adjacent borderi ng members is not possi bl y absorbed sufficiently. And when the interval w1 is narrow, the organic fiber cords 10 are in excessive quantities, production cost possibly increases. With the object of this, the interval w1 is preferably not more than 80 mm, more preferably not more than 60 mm; and the upper limit is preferably not less than 30 mm.

The cord diameter R1 of the organic fiber cords 10, as shown in Fig. 6(a), can be arbitrarily set, but when the cord diameter R1 is small, the air can be insufficiently absorbed into the cord. when the cord diameter R1 is large, adhesiveness of the members adjacent to the carcass ply 6A deteriorates, and the defect possibly develops in the members such as the tire cavity surface 9s. With the object of this, the cord diameter R1 is preferably not less than 5%, more preferably not less than 10% of the interval W2 of the carcass cords 11; and the upper limit of the cord diameter R1 is not more than 35%, more preferably not more than 30% of the interval W2.

In the same way, the total fineness D of the organic fiber cords 10 are preferably not less than 125 dtex, more preferably 167 dtex; the upper limit is not more than 960 dtex, more preferably 500 dtex.

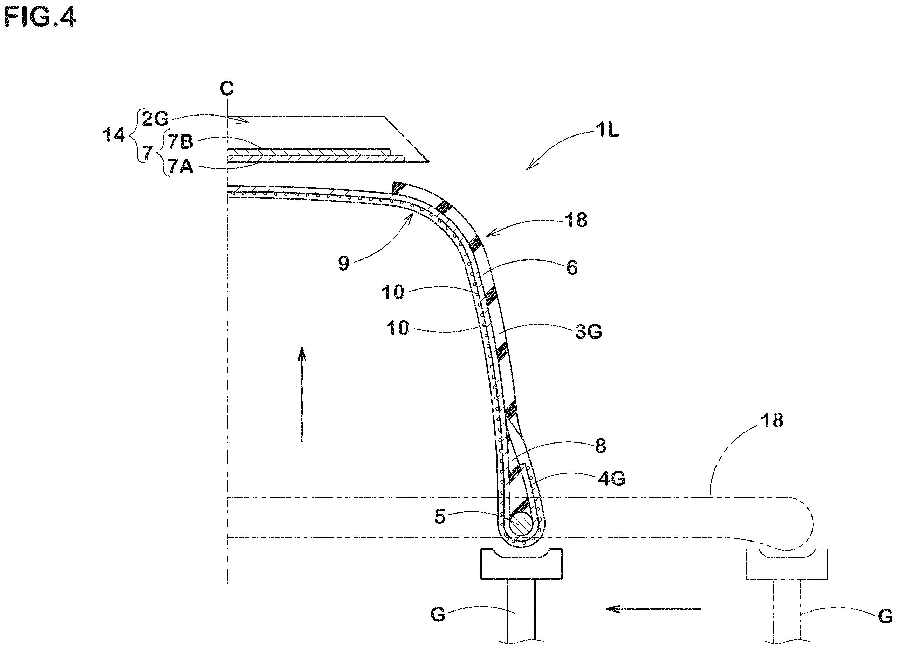

As shown in Fig. 3, the raw cover 1L forming step comprises a wi ndi ng step of wi ndi ng the sheet-like inner liner rubber 9 around a cylindrical former F,
a winding step of the composite ply formed of the carcass ply 6A and the organic fiber cords 10, and
an adheri ng step of a necessary rubber member 14 outsi de of the carcass ply 6A shown in Fig. 4.

In the winding step of the carcass ply 6A, as shown in Fig. 3, the carcass ply 6A (composite ply), the clinch rubber 4G, and the sidewall rubber 3G are wound outside the inner liner rubber 9 wound around the former F, in this embodiment, so as to form a cylindrical body 18. The organic fiber cords 10 of the present embodiment 10 is disposed on an inner side 6Ai of the carcass ply 6A.

In the cylindrical body 18, after arranging the bead core 5 and the bead apex 8, the carcass ply 6A (composite ply), the both sides of the clinch rubber 4G and the sidewall rubber 3G are turned up from the outside to the inside in the axial direction. The clinch rubber 4G and the sidewall rubber 3G can be arranged after turning up of the carcass ply 6A as necessary.

As shown in Fig. 4, in the adhering step of the rubber member 14, in accordance with customary practice, the cylindrical body 18 is shaped as a toroidal shape with a bead lock G to hold the bead core 5 while reducing the axial distance between the bead cores 5, 5. And, outside the carcass ply 6A (composite ply) of the shaped cylindrical body 18, the belt plies 7A, 7B and the rubber members 14 including the tread rubber 2G are adhered to form the raw cover 1L.

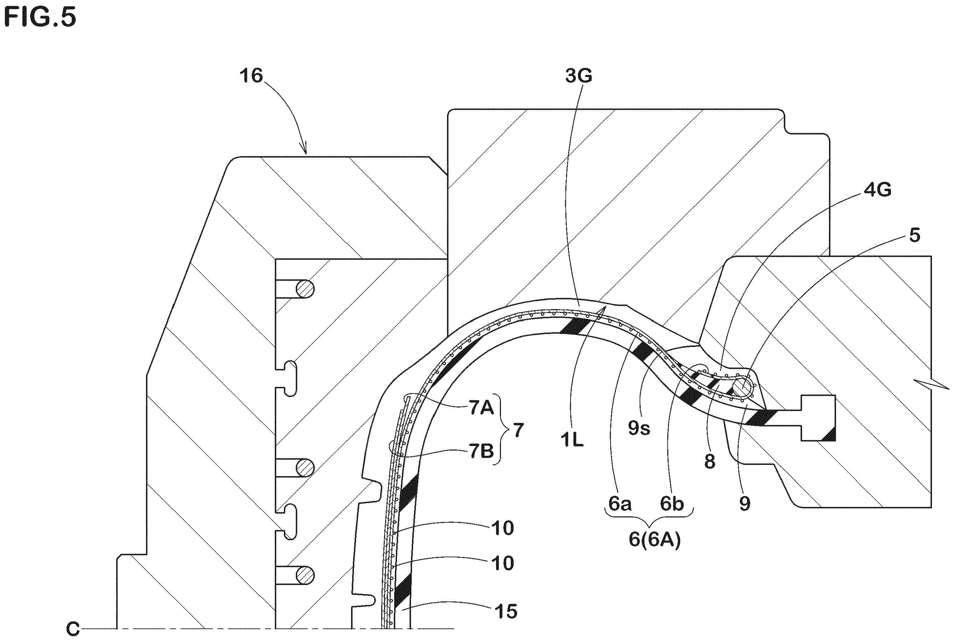

Moreover, as shown in Fig. 5, in the raw cover 1L vulcanizing step, for example, the tire cavity surface 9s of the raw cover 1L is vulcanized by being pressed toward the vulcanization mold 16 owing to the bladder 15 made of a deformable balloon-like elastomer such as a rubber so as to produce the tire 1 shown in Fig. 1.

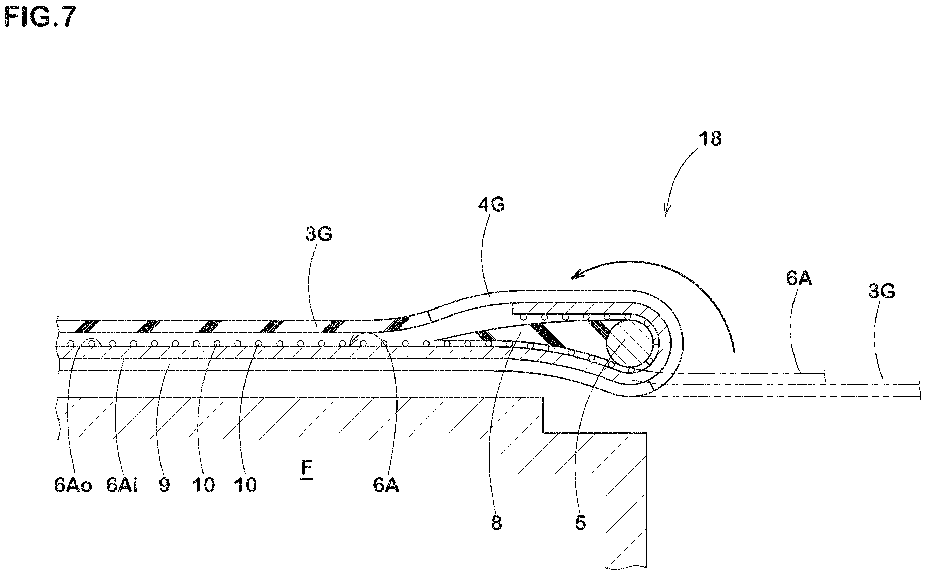

In the present embodiment, the organic fiber cords 10 are disposed on the inner side 6Ai of the carcass pl y 6A but can be disposed on the outer side 6Ao of the carcass ply 6A as shown in Fig. 7. Needless to say, the organic fiber cords 10 can be disposed on both of the inner side 6Ai of the carcass ply 6A and the outer side 6Ao of the carcass ply 6A.

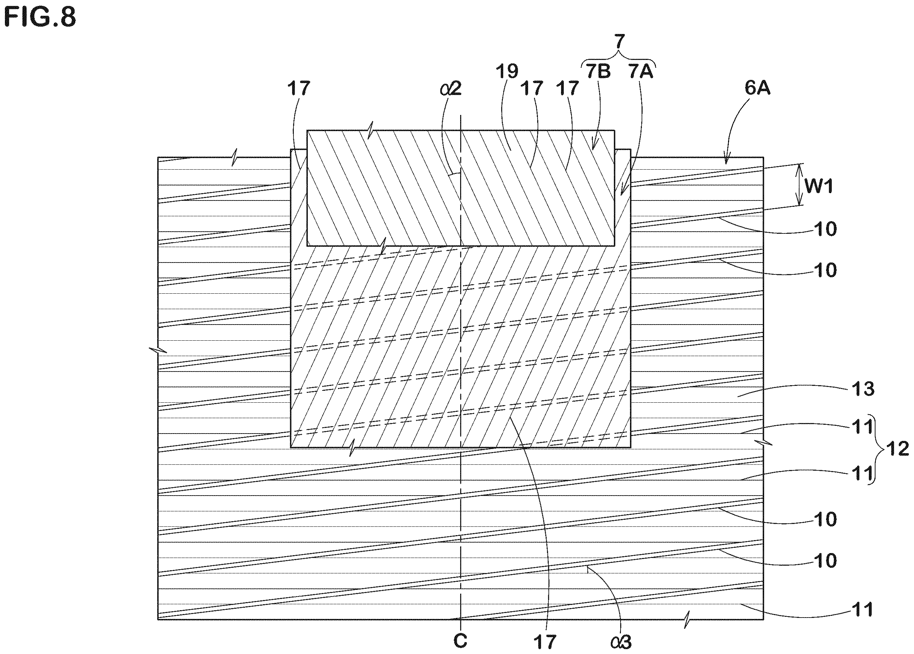

Meanwhile, like this embodiment, when the organic fiber cords 10 are disposed on the outside 6Ao of the carcass ply 6A, the organic fiber cords 10 are preferably disposed to intersect with the belt cord 17 of the inner belt ply 7A, as shown in Fig. 8. Accordingly, This prevents the organic fi ber cords 10 from denti ng into the topping rubber 19 between the belt cords 17, and inhibits the damage of the inner belt ply 7A and the development of the defect during vulcanization effectively.

Hereinbefore, especially preferred embodiments of the present i nventi on were descri bed, but it will be obvious that various changes may be made without limitation to what was shown in the drawings.

### EXAMPLE

A test tire having a basic structure shown in Figs. 1 and 2 and comprising organic fiber cords as an air-absorptive cord shown in Table 1 was produced to test a development status of defect. For comparison, the following tires were also tested:
a tire compri si ng a steel cord as an air -absorptive cord (Comparati ve Example 2), and a tire comprising spun yarn (cotton yarn) made of cotton (Comparative Example 3).
A common specification was as follows:
Tire size: 195/65R15
Rim size: 15x6.5
Carcass ply:
   Angle of carcass cords: 90 degrees
   Interval W2 of carcass cords: 1.0 mm
Belt ply:
   Angle α2 of belt cord: 22 degrees
A way of testing was as follows.

### <Developmental rate of defect in bead portion>

One hundred of the test tires were produced to visually confirm devel opment of defect on the outer surface of a bead portion. Evaluation was displayed in the developmental rate (%) of the defect. The smaller the developmental rate is, the more favorable it is.

### <Developmental rate of defect in other members (sidewall portion, tire cavity surface and the like)>

The test tires were tested by visually confirming development of the defect on the tire cavity surface when an air-absorptive cord was disposed inside the carcass ply, and by visually confirming development of the defect on the outer surface of a sidewall portion when the air-absorptive cord was disposed outside the carcass ply. Evaluation was displayed in the developmental rate (%) of the defect. The smaller the developmental rate is, the more favorable it is.

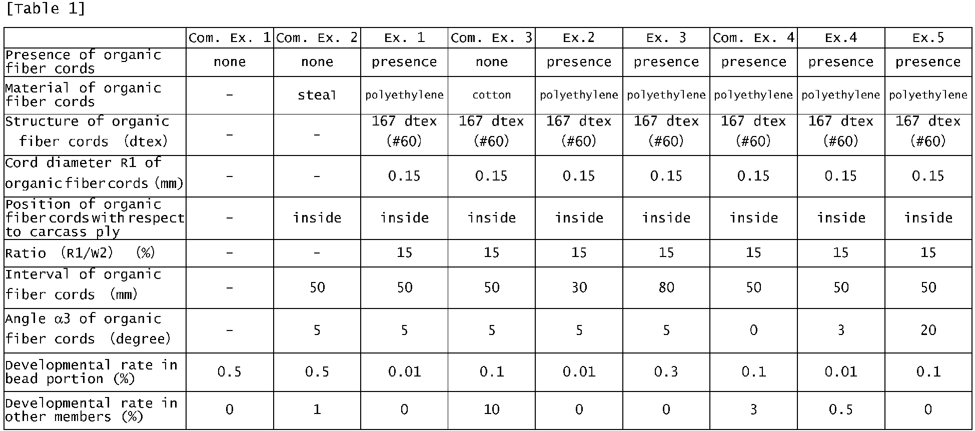

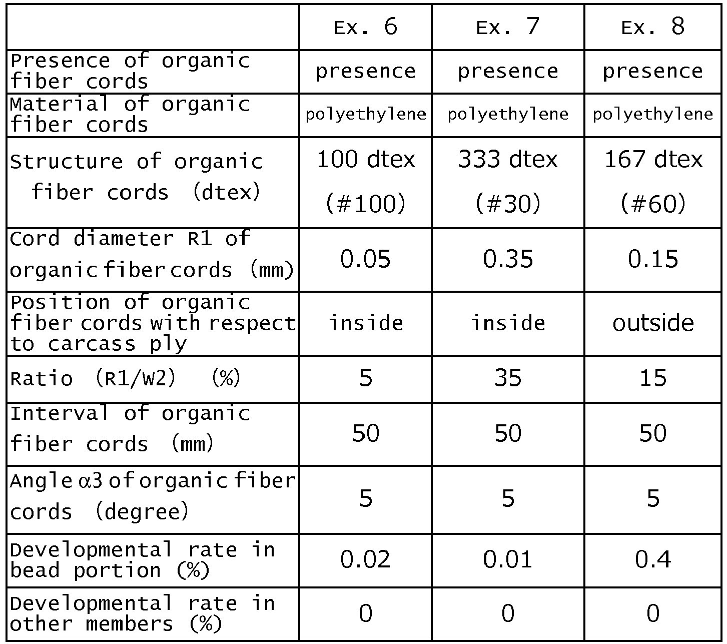

From the test result, it was confirmed that the development of defect during vulcanization could be effectively reduced.

### EXPLANATION OF THE REFERENCE

- 6A: Carcass ply
- 9: Inner liner rubber
- 10: Organic fiber cords
- 11: Carcass cords

## Claims

1. A production method of a pneumatic tire (1) with a carcass (6) comprising a toroidal carcass ply (6A) extending from a tread portion (2) through a sidewall portion (3) to a bead core (5) of a bead portion (4); wherein
said method of producing the pneumatic tire (1) comprises
a carcass ply forming step to cover both surfaces of a code array (12) made of the carcass cords (11) of the carcass ply (6A) with a topping rubber (13),
a step of forming a raw cover (L1) including the carcass (6), and
a step of vulcanizing the raw cover (L1); and
the carcass ply forming step comprises an arranging process for arranging rubber-un-coated air-absorptive organic fiber cords (10) on at least one side of the carcass ply (6A) so as to intersect with the carcass cords (11) of the carcass ply (6A),
**characterized in that**
said organic fiber cords (10) are arranged at an angle (α3) of from 3 to 20 degrees with respect to the carcass cords (11).

2. The pneumatic tire production method as set forth in claim 1, wherein said organic fiber cords (10) are arranged in parallel at intervals (W1) of from 30 to 80 mm.

3. The pneumatic tire production method as set forth in claim 1 or 2, wherein said organic fiber cords (10) have a cord diameter (R1) of from 5% to 35% of the interval (W2) of the carcass cords (11).

4. A pneumatic tire (1) comprising
a toroidal carcass (6) extendi ng from a t read porti on (2) through a sidewall portion (3) to a bead core (5) of a bead portion (4), and
air-absorptive organic fiber cords (10) intersecting with carcass cords (11) of a carcass ply (6A) on an inner or outer surface of the carcass ply (6A), said organic fiber cords (10) being rubber-un-coated before vulcanization,
**characterized in that**
said organic fiber cords (10) are arranged at an angle (α3) of from 3 to 20 degrees with respect to the carcass cords (11).

## Patentansprüche

1. Herstellungsverfahren für einen Luftreifen (1) mit einer Karkasse (6), die eine torusförmige Karkasslage (6A) umfasst, die sich von einem Laufflächenabschnitt (2) durch einen Seitenwandabschnitt (3) zu einem Wulstkern (5) eines Wulstabschnitts (4) erstreckt; wobei das Verfahren zum Herstellen des Luftreifens (1) umfasst
einen Karkasslagenbildungsschritt, um beide Oberflächen einer Kordanordnung (12), die aus Karkasskorden (11) der Karkasslage (6A) hergestellt ist, mit einem Gummierungskautschuk (13) zu bedecken,
einen Schritt eines Bildens einer Rohdecke (L1), die die Karkasse (6) umfasst, und
einen Schritt eines Vulkanisierens der Rohdecke (L1); und wobei der Karkasslagenbildungsschritt einen Anordnungsprozess zum Anordnen nicht mit Kautschuk beschichteter, Luft absorbierender, organischer Faserkorde (10) auf zumindest einer Seite der Karkasslage (6A), so dass sie die Karkasskorde (11) der Karkasslage (6A) schneiden, umfasst
**dadurch gekennzeichnet, dass**
die organischen Faserkorde (10) unter einem Winkel (α3) von 3 bis 20 Grad mit Bezug auf die Karkasskorde (11) angeordnet sind.

2. Luftreifenherstellungsverfahren nach Anspruch 1, wobei die organischen Faserkorde (10) parallel in Intervallen (W1) von 30 bis 80 mm angeordnet sind.

3. Luftreifenherstellungsverfahren nach Anspruch 1 oder 2, wobei die organischen Faserkorde (10) einen Korddurchmesser (R1) von 5% bis 35% des Intervalls (W2) der Karkasskorde (11) aufweisen.

4. Luftreifen (1), umfassend
eine torusförmige Karkasse (6), die sich von einem Laufflächenabschnitt (2) durch einen Seitenwandabschnitt (3) zu einem Wulstkern (5) eines Wulstabschnitts (4) erstreckt, und
Luft absorbierende organische Faserkorde (10), die die Karkasskorde (11) einer Karkasslage (6A) auf einer inneren oder äußeren Oberfläche der Karkasslage (6A) schneiden, wobei die organischen Faserkorde (10) vor der Vulkanisation nicht mit Kautschuk beschichtet sind,
**dadurch gekennzeichnet, dass**
die organischen Faserkorde (10) unter einem Winkel (α3) von 3 bis 20 Grad mit Bezug auf die Karkasskorde (11) angeordnet sind.

## Revendications

1. Procédé de production d'un bandage pneumatique (1) avec une carcasse (6) comprenant une nappe de carcasse toroïdale (6A) s'étendant depuis une portion formant bande de roulement (2) à travers une portion de paroi latérale (3) jusqu'à une âme de talon (5) d'une portion de talon (4) ; dans lequel
ledit procédé de production de bandage pneumatique (1) comprend une étape de formation de nappe de carcasse pour couvrir les deux surfaces d'un réseau à code (12) constitué des câblés de carcasse (11) de la nappe de carcasse (6A) avec un caoutchouc d'enrobage (13),
une étape de formation d'une couverture brute (L1) incluant la carcasse (6), et
une étape de vulcanisation de la couverture brute (L1) ; et
l'étape de formation de nappe de carcasse comprend un processus d'agencement pour agencer des câblés en fibres organiques (10) absorbant l'air et non revêtues de caoutchouc, sur au moins un côté de la nappe de carcasse (6A) de manière à recouper des câblés de carcasse (11) de la nappe de carcasse (6A),
**caractérisé en ce que**
lesdits câblés en fibres organiques (10) sont agencés sous un angle (α3) de 3 à 20° par rapport aux câblés de carcasse (11).

2. Procédé de production d'un bandage pneumatique selon la revendication 1, dans lequel lesdits câblés en fibres organiques (10) sont agencés en parallèle à intervalles (W1) de 30 à 80 mm.

3. Procédé de production d'un bandage pneumatique selon la revendication 1 ou 2, dans lequel lesdits câblés en fibres organiques (10) ont un diamètre de câblé (R1) allant de 5 % à 35 % de l'intervalle (W2) des câblés de carcasse (11).

4. Bandage pneumatique (1) comprenant
une carcasse toroïdale (6) s'étendant depuis une portion formant bande de roulement (2) à travers une portion formant paroi latérale (3) jusqu'à une âme de talon (5) d'une portion de talon (4), et
des câblés en fibres organiques absorbant l'air (10) qui recoupent des câblés de carcasse (11) d'une nappe de carcasse sur une surface intérieure ou extérieure de la nappe de carcasse (6A), lesdits câblés en fibres organiques (10) étant dépourvus de revêtement de caoutchouc avant vulcanisation,
**caractérisé en ce que**
lesdits câblés en fibres organiques (10) sont agencés sous un angle (α3) de 3 à 20° par rapport aux câblés de carcasse (11).
